# FASCICULE DE BREVET EUROPEEN

(11) **EP 3 917 792 B1**
(45) Date de publication et mention de la délivrance du brevet: **10.04.2024**
(21) Numéro de dépôt: 19839394.4
(22) Date de dépôt: 12.12.2019
(51) Int. Cl.: B60H 1/28

(54) **PRISE D'ENTRÉE D'AIR ÉQUIPÉE D'UN DÉFLECTEUR POUR UN GROUPE CLIMATISEUR DE VÉHICULE AUTOMOBILE**
LUFTANSAUGÖFFNUNG MIT EINEM DEFLEKTOR FÜR EINE KLIMAANLAGE EINES KRAFTFAHRZEUGS
AIR INTAKE PORT EQUIPPED WITH A DEFLECTOR FOR AN AIR CONDITIONING UNIT OF A MOTOR VEHICLE

(30) Priorité: 28.01.2019 FR 1900724
(43) Date de publication de la demande: 08.12.2021
(73) Titulaire: Stellantis Auto SAS, 78300 Poissy (FR)
(72) Inventeur: LEGRAND, Fabrice, 78180 MONTIGNY LE BRETONNEUX (FR)
(86) Numéro de dépôt international: PCT/FR2019/053029
(87) Numéro de publication internationale: WO 2020/157396

(56) Documents cités:
- EP-A1- 3 072 717
- DE-B3- 10 237 235
- JP-U- H0 678 019
- US-A- 6 033 300
- US-A1- 2017 136 849

## Description

[Le contexte technique de la présente invention est celui de la gestion de l'eau ruisselant sur un véhicule automobile, et plus particulièrement au niveau des prises d'air qu'on peut trouver sur un tel véhicule automobile. Plus particulièrement, l'invention a trait à une prise d'entrée d'air pour un groupe climatiseur de véhicule automobile.

Dans l'état de la technique, on connaît l'utilisation de collecteurs d'air placés sur un véhicule automobile afin de capter de l'air frais provenant de l'extérieur du véhicule automobile, par aspiration du fait du mouvement du véhicule automobile et/ou de l'air autour du véhicule. L'air frais ainsi aspiré est ensuite utilisé pour favoriser des échanges thermiques, tel que par exemple pour refroidir certains organes ou certains dispositifs électriques du véhicule automobile, ou encore pour être utilisé par des systèmes réfrigérants de l'habitacle dudit véhicule automobile.

De manière plus particulière, on connaît le document FR2895354A1 qui décrit un ensemble d'auvent pour véhicule automobile, l'ensemble d'auvent comprenant un collecteur d'air et une grille d'auvent. L'ensemble d'auvent est situé entre une partie arrière du capot et une partie avant du parebrise, et il permet de capter de l'air pour ventiler l'habitacle du véhicule automobile. L'inconvénient de cet ensemble d'auvent est que, du fait de sa position proximale au pare-brise, l'eau peut ruisseler par gravité depuis le pare-brise jusque dans le collecteur d'air de l'ensemble d'auvent, ce qui n'est pas souhaité.

Le document US2017136849 décrit un véhicule comportant une prise d'air sur un auvent disposé de sorte à réduire les risques d'entrée d'eau dans la prise d'air.

La présente invention a pour objet de proposer une nouvelle prise d'entrée d'air afin de répondre au moins en grande partie aux problèmes précédents et de conduire en outre à d'autres avantages.

Un autre but de l'invention est de permettre d'éviter que de l'eau ne s'infiltre par gravité dans la prise d'entrée d'air.

Un autre but de l'invention est d'optimiser la captation de l'air extérieur au véhicule automobile.

Selon un premier aspect de l'invention, on atteint au moins l'un des objectifs précités avec une prise d'entrée d'air pour un groupe climatiseur de véhicule automobile, la prise d'entrée d'air étant située entre un bord transversal avant d'un pare-brise du véhicule automobile et un bord transversal arrière d'un capot dudit véhicule automobile, la prise d'entrée d'air comprenant (i) une grille parefeuille s'étendant en travers de la prise d'entrée d'air, et (ii) un déflecteur configuré pour empêcher le ruissèlement d'un liquide depuis le pare-brise sur la grille parefeuille. Le déflecteur de la prise d'entrée d'air comprend une casquette qui s'étend depuis un bord arrière de la grille parefeuille situé du côté du bord transversal avant du pare-brise du véhicule automobile et à l'aplomb de la grille parefeuille. En d'autres termes, la casquette s'étend transversalement par rapport au pare-brise du véhicule automobile, et elle est située dans une position intermédiaire entre le bord transversal avant du pare-brise et la grille parefeuille de la prise d'entrée d'air conforme au premier aspect de l'invention, notamment son bord arrière. En outre, la casquette formant le déflecteur surplombe la grille parefeuille, et le déflecteur de la prise d'entrée d'air comprend un cadre périphérique à la grille parefeuille, la casquette dudit déflecteur étant relié audit cadre périphérique par l'intermédiaire de cloisons périphériques à ladite grille parefeuille.

Ainsi, le déflecteur est configuré pour éviter que le liquide - de l'eau ou un mélange d'eau et de produit lave-vitre par exemple - ruisselant sur le pare-brise du véhicule automobile ne tombe par gravité dans la prise d'entrée d'air : le déflecteur forme un obstacle à l'écoulement de l'eau entre le pare-brise et la grille parefeuille de la prise d'entrée d'air conforme au premier aspect de l'invention.

Cette configuration avantageuse permet ainsi d'éviter que de l'eau ne s'infiltre par gravité dans la prise d'entrée d'air, optimisant le fonctionnement de la prise d'entrée d'air conforme au premier aspect de l'invention. Elle permet aussi de faciliter le montage du déflecteur sur la grille parefeuille.

La prise d'entrée d'air conforme au premier aspect de l'invention comprend avantageusement au moins un des perfectionnements ci-dessous, les caractéristiques techniques formant ces perfectionnements pouvant être prises seules ou en combinaison :
- selon une direction longitudinale de la prise d'entrée d'air conforme au premier aspect de l'invention, la casquette du déflecteur s'étend préférentiellement entre le bord arrière de la grille parefeuille et un bord avant de ladite grille parefeuille, le bord avant étant situé du côté du bord transversal arrière du capot du véhicule automobile. En d'autres termes, la casquette du déflecteur recouvre longitudinalement la grille parefeuille au moins entre son bord arrière et son bord avant. Cette configuration avantageuse permet d'éviter que l'eau ruisselant sur la casquette du déflecteur ne tombe par gravité au travers de la prise d'entrée d'air conforme au premier aspect de l'invention et au niveau de ses bords longitudinaux ;
- selon une direction transversale de la prise d'entrée d'air conforme au premier aspect de l'invention, la casquette du déflecteur s'étend préférentiellement entre deux bords latéraux de la grille parefeuille. En d'autres termes, la casquette du déflecteur recouvre transversalement la grille parefeuille au moins entre ses deux bords latéraux. Cette configuration avantageuse permet d'éviter que l'eau ruisselant sur la casquette du déflecteur ne tombe par gravité au travers de la prise d'entrée d'air conforme au premier aspect de l'invention et au niveau de ses bords latéraux ;
- la casquette du déflecteur est avantageusement plane afin de faciliter sa fabrication et de mieux contrôler le ruissèlement de l'eau sur le déflecteur. En d'autres termes, une première face de la casquette située à l'aplomb de la grille parefeuille et directement en regard de ladite grille parefeuille est plane ; et/ou une deuxième face de la casquette est plane, ladite deuxième face étant située à l'aplomb de la grille parefeuille et à l'opposé de ladite grille parefeuille par rapport à la première face de la casquette. De manière avantageuse, la casquette du déflecteur est d'épaisseur constante ;
- lorsque la casquette du déflecteur est plane, elle est avantageusement inclinée par rapport à la grille parefeuille, de sorte qu'il existe un angle d'inclinaison strictement supérieur à 0° entre la grille parefeuille et ladite casquette ;
- de manière préférentielle, la casquette est plane et elle est inclinée par rapport à la grille parefeuille, de sorte qu'il existe un angle d'inclinaison strictement supérieur à 0° entre la grille parefeuille et ladite casquette, par rapport au bord arrière de la grille parefeuille ;
- la casquette est inclinée par rapport à la grille parefeuille, de sorte qu'une distance entre un bord arrière de la casquette et ladite grille parefeuille est inférieur à une distance séparant un bord avant de ladite casquette de ladite grille parefeuille. En d'autres termes, dans une direction longitudinale de la prise d'entrée d'air, prise entre le bord avant et le bord arrière de ladite prise d'entrée d'air, la casquette est inclinée de sorte qu'elle est située à une distance plus courte de la grille parefeuille au niveau de son bord arrière qu'au niveau de son bord avant ;
- la forme du cadre périphérique du déflecteur correspond avantageusement à une transformation homothétique d'une forme de la grille parefeuille, la transformation étant du type d'une dilatation homothétique de la forme de ladite grille parefeuille. En d'autres termes, la forme du cadre périphérique du déflecteur est analogue à la forme de la grille parefeuille, et les dimensions globales du cadre périphériques sont légèrement supérieures à celles de la grille parefeuille. Cette configuration avantageuse permet ainsi de faire coopérer le cadre périphérique avec la grille parefeuille par l'intermédiaire d'un accouplement extérieur, ladite grille parefeuille étant logée à l'intérieur du cadre périphérique. Cette configuration avantageuse permet aussi de faciliter l'assemblage du déflecteur sur la grille parefeuille ;
- de manière préférentielle, le cadre périphérique est formé par un contour fermé, le contour fermé formant un contour périphérique à la grille parefeuille. Alternativement, le cadre périphérique est formé par un contour ouvert, le contour ouvert comprenant un ou plusieurs segments périphériques à une partie seulement de la grille parefeuille, les contours périphériques étant distants les uns des autres ;
- au moins une partie des cloisons périphériques comprend une ouverture d'aération qui traverse de part en part ladite cloison périphérique correspondante. Cette configuration avantageuse permet d'optimiser un flux d'air entrant dans la prise d'entrée d'air conforme au premier aspect de l'invention, l'air pouvant circuler plus facilement en direction de la grille parefeuille au travers de la ou des ouvertures d'aération du déflecteur ;
- le déflecteur de la prise d'entrée d'air conforme au premier aspect de l'invention comprend :
   - une ouverture d'aération formée au niveau d'une cloison périphérique arrière du déflecteur, ladite cloison périphérique arrière étant située à proximité du bord transversal avant du pare-brise du véhicule automobile ; et/ou
   - au moins une ouverture d'aération formée au niveau d'une cloison périphérique avant du déflecteur, ladite cloison périphérique avant étant située à proximité du bord transversal arrière du capot du véhicule automobile ; et/ou
   - une ouverture d'aération formée sur au moins une des cloisons périphériques latérales du déflecteur, les cloisons périphériques latérales reliant les cloisons périphériques avant et arrière du déflecteur de part et d'autre de la grille parefeuille ;
- le déflecteur de la prise d'entrée d'air conforme au premier aspect de l'invention comprend un dispositif collecteur pour empêcher l'eau ruisselant sur la casquette de tomber par la ou les ouvertures d'aération formée sur la ou les cloisons périphériques dudit déflecteur. Complémentairement, cette configuration avantageuse permet de guider l'eau ruisselant sur la casquette en direction du cadre périphérique du déflecteur, empêchant ainsi que de l'eau ne s'infiltre au travers de la ou des ouvertures d'aération en direction de la grille parefeuille ;
- selon un premier mode de réalisation, le dispositif collecteur prend la forme au moins une nervure périphérique à la ou les ouvertures d'aération, chaque nervure périphérique s'étendant en saillie par rapport à la cloison périphérique correspondante du déflecteur et sur laquelle l'ouverture d'aération est formée. Avantageusement, dans le premier mode de réalisation, un bord avant de la casquette, situé sensiblement à l'aplomb du bord avant de la grille parefeuille, comprend une nervure périphérique qui s'étend transversalement entre deux bords latéraux du déflecteur. Selon un deuxième mode de réalisation alternatif au premier mode de réalisation, le dispositif collecteur prend la forme d'au moins une rainure périphérique à la ou les ouvertures d'aération, chaque rainure périphérique s'étendant en creux par rapport à la cloison périphérique correspondante du déflecteur et sur laquelle l'ouverture d'aération est formée ;
- selon une première variante de réalisation, le déflecteur conforme au premier aspect de l'invention est fixé de manière détachable à la grille parefeuille de la prise d'entrée d'air conforme au premier aspect de l'invention. Selon une deuxième variante de réalisation, alternative ou complémentaire de la première variante de réalisation, le déflecteur conforme au premier aspect de l'invention est fixé de manière détachable à une structure d'armature du véhicule automobile et sur laquelle la prise d'entrée d'air est elle aussi fixée de manière amovible ;
- dans l'une ou l'autre de ses variantes de réalisation, le déflecteur conforme au premier aspect de l'invention est fixé de manière détachable par encliquetage ou par des vis de fixation ;
- de manière avantageuse, le déflecteur comprend six dispositifs d'encliquetage collaborant avec des dispositifs complémentaires situés sur la grille portefeuille et/ou le déflecteur comprend au moins deux pattes de fixation pour fixer solidairement et de manière détachable ledit déflecteur sur une structure du véhicule automobile. Cette configuration avantageuse permet d'une part de faciliter la mise en position du déflecteur sur la grille parefeuille, par l'intermédiaire des dispositifs d'encliquetage et, d'autres part, de sécuriser la fixation du déflecteur sur la grille parefeuille en permettant une fixation temporaire dudit déflecteur sur la structure du véhicule automobile ;
- le déflecteur de la prise d'entrée d'air conforme au premier aspect de l'invention est formé dans une matière plastique. De manière avantageuse, le déflecteur est fabriqué par moulage.

Selon un deuxième aspect de l'invention, il est proposé un véhicule automobile comprenant un pare-brise, un capot et une prise d'entrée d'air conforme au premier aspect de l'invention ou selon l'un quelconque de ses perfectionnements, ladite prise d'entrée d'air étant située entre un bord transversal avant du pare-brise et un bord transversal arrière du capot afin de récupérer l'eau de pluie ruisselant dudit pare-brise.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre une vue en perspective de profil arrière d'une zone de pare-brise et de capot d'un véhicule automobile dans laquelle se trouve la prise d'entrée d'air conforme au premier aspect de l'invention ;
[Fig.2] illustre une vue en perspective de profil avant de la zone illustrée sur la FIGURE 1, dans laquelle le capot a été omis afin de laisser apparaitre la prise d'entrée d'air conforme au premier aspect de l'invention dans son contexte d'intégration sur le véhicule automobile ;
[Fig.3] illustre une vue en perspective d'un déflecteur de la prise d'entrée d'air conforme au premier aspect de l'invention, le déflecteur étant associé à une grille parefeuille de ladite prise d'entrée d'air ;
[Fig.4] illustre une vue en perspective d'un déflecteur de la prise d'entrée d'air conforme au premier aspect de l'invention, le déflecteur étant associé à une grille parefeuille de ladite prise d'entrée d'air.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

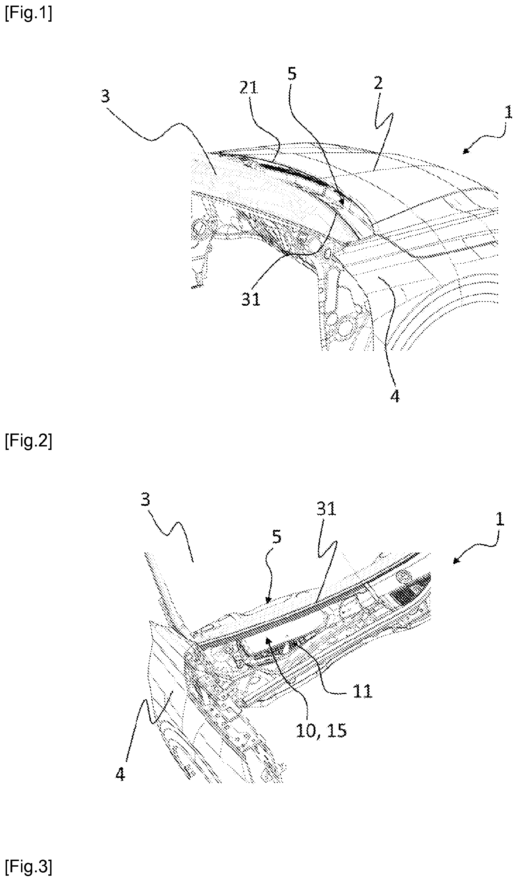

En référence aux FIGURES 1 et 2, il est représenté une partie avant d'un véhicule automobile 1 conforme au deuxième aspect de l'invention. Plus particulièrement, le véhicule automobile 1 est représenté au niveau d'une zone comprise entre un bord transversal avant 31 d'un pare-brise 3 et un bord transversal arrière 21 d'un capot 2, à proximité d'une aile avant 4 du véhicule automobile 1. Au niveau de cette zone, lorsqu'un liquide - de l'eau de pluie par exemple ou un mélange d'eau et de produit lave-vitre - est présent sur le pare-brise 3, une partie peut s'écouler par gravité en direction du bord transversal avant 31, le bord transversal avant 31 étant situé en contrebas duit pare-brise 3. Une fois arrivé au niveau du bord transversal avant 31, le liquide s'écoule en direction du capot 2 et vers le bas pour être évacué.

Entre le bord transversal avant 31 du pare-brise 3 et le bord transversal arrière 21 du capot 2, le véhicule automobile 1 comprend une grille d'auvent 5 qui ferme la partie du capot 2 située à proximité du pare-brise 3. La grille d'auvent 5 est ajourée et le liquide ruisselant du pare-brise 3 et arrivant sur la grille d'auvent 5 la traverse par gravité pour ruisseler sur les pièces situées en dessous.

Comme visible sur la FIGURE 2, le véhicule automobile 1 comprend une prise d'entrée d'air 10 conforme au premier aspect de l'invention afin de pouvoir capter l'air extérieur au véhicule automobile 1 et de pouvoir l'utiliser pour refroidir divers éléments dudit véhicule automobile, ou pour être utilisé dans un groupe climatiseur (non représenté) pour ventiler et/ou refroidir un habitacle du véhicule automobile 1. La prise d'entrée d'air 10 est située juste en dessous de la grille d'auvent 5, de sorte que le liquide traversant la grille d'auvent est susceptible de s'infiltrer dans ladite prise d'entrée d'air 10, ce qui n'est pas souhaitée.

Afin de résoudre astucieusement ce problème technique, la prise d'entrée d'air 10 conforme au premier aspect de l'invention comprend une grille parefeuille 11 s'étendant latéralement en travers de la prise d'entrée d'air 10, et un déflecteur 15 configuré pour empêcher le ruissèlement du liquide sur la grille parefeuille 11.

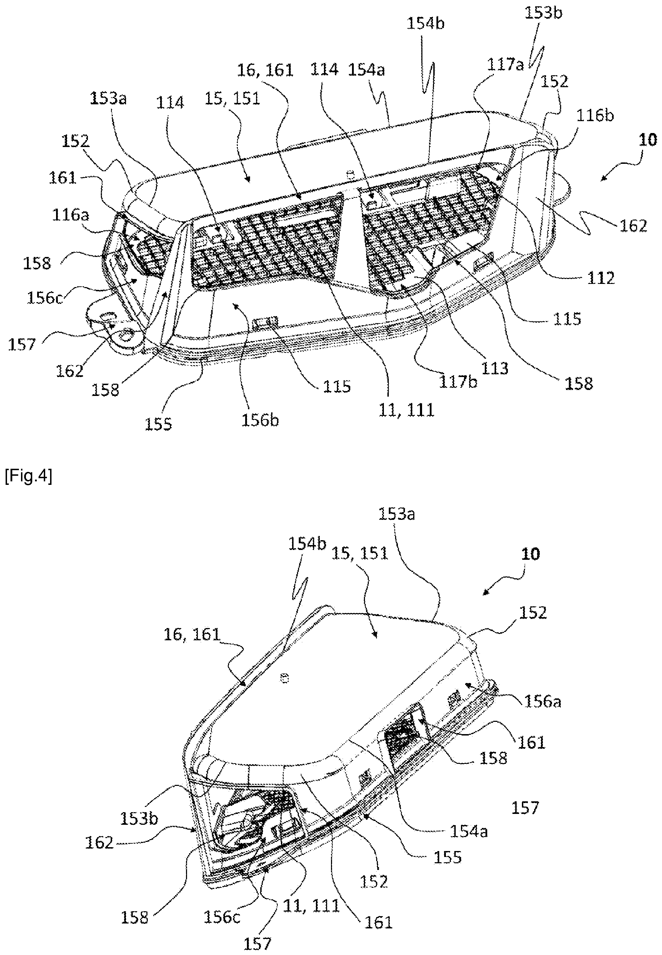

Un exemple de réalisation de la grille d'entrée d'air 10 conforme au premier aspect de l'invention va maintenant être décrit plus en détail en référence aux FIGURES 3 et 4.

La grille parefeuille 11 est plane et comprend une grille 111 régulière formant un réseau périodique d'orifices 112 dont les dimensions sont telles qu'elles empêchent des feuilles de passer au travers tandis qu'un flux d'air peut s'écouler au travers de ladite grille 111 de la grille parefeuille 11.

Au niveau d'une zone périphérique à la grille 111, la grille parefeuille 11 comprend un contour périphérique 113 qui forme un cerclage fermé autour de l'ensemble des orifices 112 de la grille 111. Le contour périphérique 113 est dépourvu d'orifices 112. En revanche, le contour périphérique 113 de la grille parefeuille 11 comprend des premiers dispositifs de fixation détachable 114 de la grille parefeuille 11 sur une structure du véhicule automobile 1, et/ou des seconds dispositifs de fixation détachable 115 du déflecteur 15 sur la grille parefeuille 11.

Dans l'exemple de réalisation illustré sur les FIGURES 3 et 4, les premiers 114 et/ou deuxièmes 115 dispositifs de fixation détachable sont du type d'un dispositif d'encliquetage.

De manière avantageuse, le déflecteur 15 comprend six dispositifs de fixation détachable 115 du type encliquetage et collaborant avec des dispositifs complémentaires situés sur la grille portefeuille 11 ; et le déflecteur 15 comprend deux pattes de fixation 157 pour fixer solidairement et de manière détachable ledit déflecteur 15 sur une structure du véhicule automobile 1.

La grille parefeuille 11 est avantageusement réalisée dans un matériau plastique et obtenue par moulage.

Le déflecteur 15 de la prise d'entrée d'air 10 conforme au premier aspect de l'invention est configuré pour s'accoupler avec la grille parefeuille 11 afin d'empêcher un liquide ruisselant depuis le bord transversal avant 31 du pare-brise 3 d'atteindre ladite grille parefeuille 11. A cet effet, le déflecteur 15 s'étend avantageusement autour et au-dessus de la grille parefeuille 11, comme il va être décrit dans les paragraphes suivants.

Le déflecteur 15 de la prise d'entrée d'air 10 conforme au premier aspect de l'invention comprend une casquette 151 qui s'étend depuis un bord arrière de la grille parefeuille 11 - situé du côté du bord transversal avant 31 du pare-brise 3 (non visible sur les FIGURES 3 et 4) et à l'aplomb de la grille parefeuille. Ainsi, la casquette 151 du déflecteur 15 est située dans une position intermédiaire entre le bord transversal avant 31 du pare-brise 3 et la grille parefeuille 11 et surplombe la grille parefeuille 11 entre ses deux bords latéraux 116a, 116b.

Complémentairement, la casquette 151 du déflecteur 15 s'étend aussi entre un bord arrière 117a et un bord avant 117b de la grille parefeuille 11. Ainsi, la casquette 151 du déflecteur 15 est située dans une position intermédiaire entre le bord transversal avant 31 du pare-brise 3 et la grille parefeuille 11 et surplombe la grille parefeuille 11 entre ses bords arrière 117a et avant 117b.

Consécutivement, et comme visible sur les FIGUES 3 et 4, la casquette 151 du déflecteur 15 a une surface telle qu'elle couvre intégralement la grille parefeuille 11 entre ses bords latéraux 116a, 116b, avant 117b et arrière 117a. cette configuration avantageuse permet d'éviter que le liquide ruisselant sur la casquette 151 du déflecteur 15 depuis la grille d'auvent 5 ne tombe par gravité au travers de la prise d'entrée d'air 10 conforme au premier aspect de l'invention.

La casquette 151 du déflecteur 15 forme avantageusement une surface plane afin de faciliter sa fabrication et de mieux contrôler le ruissèlement du liquide sur le déflecteur 15. La casquette 151 comprend en outre un chanfrein périphérique 152 sur au moins une partie des bords 153a, 153b, 154a de la casquette 151, et notamment sur les bords latéraux 153a, 153b et arrière 154a de ladite casquette 151.

Afin de mieux contrôler l'écoulement du liquide sur la casquette 151, la casquette 151 est avantageusement inclinée par rapport à la grille parefeuille 11, de sorte qu'il existe un angle d'inclinaison strictement supérieur à 0° entre la grille parefeuille 11 et ladite casquette 151. Plus particulièrement, la casquette 151 est avantageusement inclinée autour du bord arrière 117a de la grille parefeuille 11, de sorte qu'une distance entre un bord arrière 154a de la casquette 151 et le bord arrière 117a de la grille parefeuille 11 est inférieure à une distance séparant un bord avant 154b de ladite casquette et le bord avant 117b de ladite grille parefeuille 11.

Afin de faciliter le montage du déflecteur 15 sur la grille parefeuille 11, le déflecteur 15 de la prise d'entrée d'air 10 conforme au premier aspect de l'invention comprend un cadre périphérique 155 à la grille parefeuille 11. A cet effet, une forme du cadre périphérique 155 du déflecteur 15 correspond avantageusement à une transformation homothétique d'une forme de la grille parefeuille 11 et ou de son contour périphérique 113. La transformation homothétique est avantageusement du type d'une dilatation homothétique de la forme de la grille parefeuille 11 et/ou de son contour périphérique 113 afin de permettre un accouplement de formes complémentaires. Ainsi, lorsque le déflecteur 15 et la grille parefeuille 11 sont fixés solidairement ensemble afin de former la prise d'entrée d'air 10 conforme au premier aspect de l'invention, la grille parefeuille 11 est logée à l'intérieur du cadre périphérique 155 du déflecteur 15.

Dans l'exemple de réalisation illustré sur les FIGURES 3 et 4, le cadre périphérique 155 est formé par un contour fermé tout autour de la grille parefeuille 11.

Lorsque le déflecteur 15 et la grille parefeuille 11 sont assemblés sur la prise d'entrée d'air 10 conforme au premier aspect de l'invention, le cadre périphérique 155 du déflecteur 15 est configuré pour être situé dans ou sensiblement dans un même plan que la grille parefeuille 11.

Le cadre périphérique 155 du déflecteur 15 est situé à distance de la casquette 151 dudit déflecteur 15. La casquette 151 du déflecteur 15 est reliée au cadre périphérique 155 dudit déflecteur 15 par l'intermédiaire de cloisons périphériques 156a, 156b, 156c, 156d. Les cloisons périphériques 156a-156d sont situées autour de la grille parefeuille 11, et notamment en périphérie du contour périphérique 113 de ladite grille parefeuille 11.

Afin d'optimiser un flux d'air entrant dans la prise d'entrée 10 d'air conforme au premier aspect de l'invention, au moins une partie des cloisons périphériques 156a-156d comprend une ouverture d'aération 158 qui traverse de part en part ladite cloison périphérique 156a-156d correspondante. Cette configuration avantageuse permet de faciliter une circulation d'un flux d'air en direction de la grille parefeuille 11 au travers de la ou des ouvertures d'aération 158 du déflecteur 15. En particulier, dans l'exemple de réalisation illustré sur les FIGURES 3 et 4, le déflecteur 15 comprend :
- une ouverture d'aération 158 formée au niveau de la cloison périphérique arrière 156a du déflecteur 15 ; et/ou
- au moins une ouverture d'aération 158 formée au niveau de la cloison périphérique avant 156b du déflecteur 15, et préférentiellement deux ouvertures d'aération 158 séparée par un pilier central ; et/ou
- une ouverture d'aération 158 formée sur chacune des cloisons périphériques latérales 156c du déflecteur 15.

De manière avantageuse, afin d'empêcher l'écoulement du liquide ruisselant sur la casquette 151 du déflecteur 15 au travers des ouvertures d'aération 158, le déflecteur 15 de la prise d'entrée d'air 10 conforme au premier aspect de l'invention comprend un dispositif collecteur 16. Le dispositif collecteur 16 permet ainsi de guider le liquide ruisselant sur la casquette 151 en direction du cadre périphérique 155 du déflecteur 15 plutôt qu'en direction de la grille parefeuille 11.

Dans l'exemple de réalisation illustré sur les FIGURES 3 et 4, le dispositif collecteur 16 prend la forme d'une nervure périphérique 161 aux ouvertures d'aération 158, chaque nervure périphérique 161 s'étendant en saillie par rapport à la cloison périphérique 156a-156c correspondante du déflecteur 15 et sur laquelle l'ouverture d'aération 158 est formée.

Plus particulièrement, le bord avant 154b de la casquette 151 comprend une nervure périphérique 161 qui s'étend transversalement entre deux bords latéraux 153a, 153b de la casquette 151 du déflecteur 15. En outre, chaque ouverture d'aération 158 est avantageusement bordée au moins en partie par une telle nervure périphérique 161, au moins au niveau d'un bord proximal de l'ouverture d'aération 158 correspondante par rapport à la casquette 151 du déflecteur 15, et/ou au niveau d'un bord latéral de l'ouverture d'aération 158 correspondante. En particulier, le déflecteur 15 comprend deux nervures périphériques 161 qui relient la casquette 151 au cadre périphérique 155 dudit déflecteur 15 et qui son situées de part et d'autre des deux ouvertures d'aération 158 de la cloison périphérique avant 156b dudit déflecteur 15. Ces deux nervures périphériques 161 s'étendent verticalement entre la casquette 151 et le cadre périphérique 155 ; et elles s'étendent en saillie par rapport à la cloison périphérique avant 156b du déflecteur 15, afin d'empêcher un écoulement du liquide depuis la casquette 151 vers la cloison périphérique avant 156b par les côtés latéraux dudit déflecteur 15.

En synthèse, l'invention concerne une prise d'entrée d'air 10 située entre un bord transversal avant 31 d'un pare-brise 3 de véhicule automobile 1 et un bord transversal arrière 21 d'un capot 2 dudit véhicule automobile 1. La prise d'entrée d'air 10 conforme à l'invention comprend une grille parefeuille 11 et un déflecteur 15 configuré pour empêcher un ruissèlement de liquide au travers de la grille parefeuille 11. A cet effet, le déflecteur 15 comprend une casquette 151 qui surplombe toute la surface de la grille parefeuille 11.

L'invention concerne aussi un véhicule automobile 1 comprenant un pare-brise 3, un capot 2 et une prise d'entrée d'air 10 selon l'invention.

Bien sûr, l'invention n'est pas limitée aux exemples qui viennent d'être décrits et de nombreux aménagements peuvent être apportés à ces exemples sans sortir du cadre de l'invention, qui est défini par les revendications. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres, et en restant dans le cadre défini par les revendications. En particulier toutes les variantes et modes de réalisation décrits précédemment sont combinables entre eux.

## Revendications

1. Prise d'entrée d'air (10) pour un groupe climatiseur de véhicule automobile (1), la prise d'entrée d'air (10) étant située entre un bord transversal avant (31) d'un pare-brise (3) du véhicule automobile (1) et un bord transversal arrière (21) d'un capot (2) dudit véhicule automobile (1), la prise d'entrée d'air (10) comprenant :
- une grille parefeuille (11) s'étendant en travers de la prise d'entrée d'air (10) ; et
- un déflecteur (15) configuré pour empêcher le ruissèlement d'un liquide depuis le pare-brise (3) sur la grille parefeuille (11), le déflecteur (15) comprenant une casquette (151) qui s'étend depuis un bord arrière (117a) de la grille parefeuille (11) situé du côté du bord transversal avant (31) du pare-brise (3) du véhicule automobile (1) et à l'aplomb de la grille parefeuille (11), **caractérisé en ce que** le déflecteur (15) comprend un cadre périphérique (155) à la grille parefeuille (11), la casquette (151) dudit déflecteur (15) étant relié audit cadre périphérique (155) par l'intermédiaire de cloisons périphériques (156a, 156b, 156c) à ladite grille parefeuille (11).

2. Prise d'entrée d'air (10) selon la revendication précédente, dans laquelle la casquette (151) est plane et elle est inclinée par rapport à la grille parefeuille (11), de sorte qu'il existe un angle d'inclinaison strictement supérieur à 0° entre la grille parefeuille (11) et ladite casquette (151), par rapport au bord arrière (117a) de la grille parefeuille (11).

3. Prise d'entrée d'air (10) selon l'une des revendications précédentes, dans laquelle le déflecteur (15) comprend :
- une ouverture d'aération (158) formée au niveau d'une cloison périphérique arrière (156a) du déflecteur (15), ladite cloison périphérique arrière (156a) étant située à proximité du bord transversal avant (31) du pare-brise (3) du véhicule automobile (1) ; et/ou
- au moins une ouverture d'aération (158) formée au niveau d'une cloison périphérique avant (156b) du déflecteur (15), ladite cloison périphérique avant (156b) étant située à proximité du bord transversal arrière (21) du capot (2) du véhicule automobile (1) ; et/ou
- une ouverture d'aération (158) formée sur au moins une des cloisons périphériques latérales (156c) du déflecteur (15), les cloisons périphériques latérales (156c) reliant les cloisons périphériques avant (156b) et arrière (156a) du déflecteur (15) de part et d'autre de la grille parefeuille (11).

4. Prise d'entrée d'air (10) selon la revendication précédente, dans laquelle le déflecteur (15) comprend un dispositif collecteur (16) pour empêcher l'eau ruisselant sur la casquette (151) de tomber par la ou les ouvertures d'aération (158) formée sur la ou les cloisons périphériques (156a-156c) dudit déflecteur (15).

5. Prise d'entrée d'air (10) selon la revendication précédente, dans laquelle le dispositif collecteur (16) prend la forme au moins une nervure périphérique (161) à la ou les ouvertures d'aération (158), chaque nervure périphérique (161) s'étendant en saillie par rapport à la cloison périphérique (156a-156c) correspondante du déflecteur (15) et sur laquelle l'ouverture d'aération (158) est formée.

6. Prise d'entrée d'air (10) selon la revendication précédente, dans laquelle un bord avant (154b) de la casquette (151), situé sensiblement à l'aplomb du bord avant (117b) de la grille parefeuille (11), comprend une nervure périphérique (161) qui s'étend transversalement entre deux bords latéraux (153a, 153b) du déflecteur (15).

7. Prise d'entrée d'air (10) selon l'une quelconque des revendications précédentes, dans lequel le déflecteur (15) comprend six dispositifs d'encliquetage collaborant avec des dispositifs complémentaires situés sur la grille portefeuille et/ou le déflecteur (15) comprend au moins deux pattes de fixation pour fixer solidairement et de manière détachable ledit déflecteur (15) sur une structure du véhicule automobile (1).

8. Véhicule automobile (1) comprenant un pare-brise (3), un capot (2) et une prise d'entrée d'air (10) selon l'une quelconque des revendications précédentes, ladite prise d'entrée d'air (10) étant située entre un bord transversal avant (31) du pare-brise (3) et un bord transversal arrière (21) du capot (2) afin de récupérer l'eau de pluie ruisselant dudit pare-brise (3).

## Patentansprüche

1. Lufteinlass (10) für ein Kraftfahrzeug-Klimagerät (1), wobei sich der Lufteinlass (10) zwischen einer vorderen Querkante (31) einer Windschutzscheibe (3) des Kraftfahrzeugs (1) und einer hinteren Querkante (21) einer Haube (2) des Kraftfahrzeugs (1) befindet, der Lufteinlass Luft (10), bestehend aus:
- ein sich über den Lufteinlass (10) erstreckendes Flächengitter (11); und
- einem Deflektor (15), der so ausgebildet ist, dass er das Eindringen von Flüssigkeit von der Windschutzscheibe (3) auf das Parabel-Gitter (11) verhindert, wobei der Deflektor (15) eine Kappe (151) aufweist, die sich von einer Hinterkante (117a) des Parabel-Gitters (11) auf der Seite der vorderen Querkante (311) der Scheibe erstreckt Windschutzscheibe (3) des Kraftfahrzeugs (1) und mit Blende des Windschutzgitters (11),
Das Ablenkblech (15) umfasst einen Umfangsrahmen (155) an dem Flächengitter (11), wobei die Kappe (151) des Ablenkblechs (15) mit dem Umfangsrahmen (155) über Umfangswände (156a, 156b, 156c) an dem Flächengitter verbunden ist Blatt (11).

2. Lufteinlass (10) nach dem vorhergehenden Anspruch, bei dem die Kappe (151) eben ist und in Bezug auf das Blattgitter (11) geneigt ist, sodass ein Neigungswinkel zwischen dem Blattgitter (11) und der Kappe (151) in Bezug auf den Hinterrand (15) streng größer als 0° ist (117a) des Blattgitters (11).

3. Lufteinlass (10) nach einem der vorhergehenden Ansprüche, bei dem der Ablenkkörper (15) umfasst:
- eine Entlüftungsöffnung (158), die an einer hinteren Umfangswand (156a) des Deflektors (15) ausgebildet ist, wobei die hintere Umfangswand (156a) nahe der vorderen Querkante (31) der Windschutzscheibe (3) des Kraftfahrzeugs (1) angeordnet ist; und/oder
- mindestens eine Entlüftungsöffnung (158), die an einer vorderen Umfangswand (156b) des Deflektors (15) ausgebildet ist, wobei die vordere Umfangswand (156b) nahe der hinteren Querkante (21) der Haube (2) des Kraftfahrzeugs (1) angeordnet ist; und/oder
- eine Entlüftungsöffnung (158), die an mindestens einer der seitlichen Umfangswände (156c) des Deflektors (15) ausgebildet ist, wobei die seitlichen Umfangswände (156c) die vorderen (156b) und hinteren (156a) Umfangswände des Deflektors (15) beiderseits des Parabolgitters (11) verbinden.

4. Lufteinlass (10) nach dem vorhergehenden Anspruch, wobei die Ablenkeinrichtung (15) eine Sammeleinrichtung (16) umfasst, um zu verhindern, dass das auf der Kappe (151) aufströmende Wasser durch die Belüftungsöffnung(en) (158) fällt, die auf der oder den Umfangswänden (156a-155c) ausgebildet ist/sind des Ablenkers (15).

5. Lufteinlass (10) nach dem vorhergehenden Anspruch, bei dem die Sammeleinrichtung (16) wenigstens eine Umfangsrippe (161) an der oder den Belüftungsöffnungen (158) bildet, wobei jede Umfangsrippe (161) sich von der Umfangswand (156a-156c) nach oben erstreckt (15), auf dem die Belüftungsöffnung (158) ausgebildet ist.

6. Lufteinlass (10) nach dem vorhergehenden Anspruch, wobei eine vordere Kante (154b) der Kappe (151), die im Wesentlichen vor der vorderen Kante (117b) des Plattengitters (11) liegt, eine periphere Rippe (161) aufweist, die sich quer zwischen zwei seitlichen Rändern (153a, 153b) erstreckt des Deflektors (15).

7. Lufteinlass (10) nach einem der vorhergehenden Ansprüche, wobei die Ablenkeinrichtung (15) sechs Rasteinrichtungen umfasst, die mit komplementären Einrichtungen auf dem Flügelraster zusammenwirken, und/oder die Ablenkeinrichtung (15) mindestens zwei Befestigungslaschen umfasst, um die Ablenkeinrichtung (15) fest und lösbar an einer Struktur des Kraftfahrzeugs (1) zu befestigen.

8. Kraftfahrzeug (1) mit einer Windschutzscheibe (3), einer Abdeckung (2) und einem Lufteinlass (10) nach einem der vorhergehenden Ansprüche, wobei der Lufteinlass (10) zwischen einer vorderen Querkante (31) der Windschutzscheibe (3) und einer hinteren Querkante (21) der Abdeckung (2) angeordnet ist, um die Abdeckung zurückzugewinnen Das Regenwasser der Windschutzscheibe (3) ist aus.

## Claims

1. Air inlet outlet (10) for a motor vehicle air conditioning unit (1), the air intake outlet (10) being located between a front (31) transverse edge of a windscreen (3) of the motor vehicle (1) and a rear (21) transverse edge of a hood (2) of the said motor vehicle (1), the outlet of the vehicle air inlet (10) comprising:
- a flashing grid (11) extending across the intake of air (10); and
- a deflector (15) configured to prevent a liquid from crashing from the windscreen (3) on the flashing grid (11), the deflector (15) consisting of a cap (151) that extends from a rear edge (117a) of the flashing grid (11) on the side of the front transverse edge (31) the windscreen (3) of the motor vehicle (1) and the flashing grid (11),
**characterized in that** the deflector (15) includes a peripheral frame (155) at the screen grid (11), the cap (151) of the said deflector (15) being connected to that peripheral frame (155) through peripheral bulkheads (156a, 156b, 156c) to the said timestamp (11).

2. Air inlet outlet (10) according to the previous claim, in which the cap (151) is flat and inclined to the flashing grid (11), so that there is a tilt angle strictly greater than 0° between the flashing grid (11) and the flashing grid (151), respectively on the rear edge (117a) of the flashing grid (11).

3. Air intake (10) according to one of the previous claims, in which the deflector (15) includes:
- a ventilation opening (158) formed at a rear peripheral bulkhead (156a) of the deflector (15), the rear peripheral bulkhead (156a) being located close to the front transverse edge (31) of the windscreen (3) of the motor vehicle (1); and/or
- at least one ventilation opening (158) formed at a front peripheral bulkhead (156b) of the deflector (15), the front peripheral bulkhead (156b) being located close to the rear transverse edge (21) of the hood (2) of the motor vehicle (1); and/or
- a ventilation opening (158) formed on at least one of the lateral peripheral partitions (156c) of the deflector (15), the lateral peripheral partitions (156c) connecting the front (156b) and rear (156a) peripherals of the deflector (15) on both sides of the flashing grid city (11).

4. Air inlet outlet (10) according to the previous claim, in which the deflector (15) includes a manifold device (16) to prevent water flowing on the cap (151) from falling through the ventilation opening(s) (158) formed on the peripheral partition(s) (156a-156c) said deflector (15).

5. Air inlet outlet (10) according to the previous claim, in which the manifold device (16) takes the form of at least one peripheral rib (161) at the vent opening(s) (158), with each peripheral rib (161) extending in relation to the peripheral bulkhead (156a-156c) corresponding to the deflector (15) and on which the ventilation opening (158) is formed.

6. Air inlet outlet (10) according to the previous claim, in which a front edge (154b) of the cap (151), located substantially above the front edge (117b) of the screen grid (11), includes a peripheral rib (161) that extends across two edges side (153a, 153b) of the deflector (15).

7. Air inlet outlet (10) according to any of the previous claims, in which the deflector (15) includes six locking devices working with complementary devices located on the wallet grid and/or the deflector (15) includes at least two fixing legs to secure the deflector securely and detachable (15) on a vehicle structure automobile (1).

8. Motor vehicle (1) comprising a windshield (3), a hood (2) and an air inlet outlet (10) according to any of the preceding claims, the said air inlet outlet (10) being located between a front (31) transverse edge of the windscreen (3) and a rear (21) transverse edge of the hood (2) to recover the rainwater flowing from the said windscreen (3).
